# EUROPEAN PATENT APPLICATION

(11) **EP 4 738 481 A1**
(43) Date of publication of application: **06.05.2026**
(21) Application number: 24832145.7
(22) Date of filing: 28.06.2024
(51) Int. Cl.: H01M 4/96, B01J 21/18, B01J 23/42, B01J 32/00, C01B 32/30, H01M 8/10

(54) **CARBON MATERIAL FOR CATALYST CARRIER OF SOLID POLYMER FUEL CELL, CATALYST LAYER FOR SOLID POLYMER FUEL CELL, AND FUEL CELL**

(30) Priority: 30.06.2023 JP 2023108950
(71) Applicant: NIPPON STEEL CHEMICAL & MATERIAL CO., LTD., Tokyo 103-0027 (JP)
(72) Inventor: TADOKORO, Kenichiro, Tokyo 103-0027 (JP); MASAKI, Kazuyoshi, Tokyo 103-0027 (JP); DAITO, Noboru, Tokyo 103-0027 (JP); IIJIMA, Takashi, Tokyo 100-8071 (JP); NEGI, Noriyuki, Tokyo 100-8071 (JP); SHIMIZU, Takayuki, Tokyo 103-0027 (JP)
(74) Representative: SONN Patentanwälte GmbH & Co KG
(86) International application number: PCT/JP2024/023652
(87) International publication number: WO 2025/005289

(57) **Abstract**

A carbon material for a catalyst carrier of a solid polymer fuel cell, the carbon material including porous activated carbon black satisfying the following requirements (A), (B), (C), and (D):
(A) an average primary particle size is from more than 30 nm to 100 nm,
(B) a BET specific surface area is from 350 m²/g to 800 m²/g,
(C) Lc (002) obtained by analyzing a peak at a diffraction angle 2θ of from 20° to 26.5° in an XRD spectrum obtained with XRD (X-ray diffraction) measurement is from 1.7 nm to 4.0 nm, and
(D) La (110) obtained by analyzing a peak at a diffraction angle 2θ of from 70° to 80° in the XRD spectrum obtained with XRD (X-ray diffraction) measurement is 3.5 nm or less.

## Description

### Technical Field

The present disclosure relates to a carbon material for a catalyst carrier of a solid polymer fuel cell, a catalyst layer for a solid polymer fuel cell, and a fuel cell.

### Background Art

A solid polymer fuel cell which is one of fuel batteries includes paired catalyst layers placed on both surfaces of a solid polymer electrolyte membrane, a gas diffusion layer placed outside each of the catalyst layers, and a separator placed outside such each. One catalyst layer of the paired catalyst layers serves as an anode of the solid polymer fuel cell, and the other catalyst layer serves as a cathode of the solid polymer fuel cell. In a usual solid polymer fuel cell, plural unit cells each having the above constituent components are stacked in order to obtain the desired output.

A reducing gas such as hydrogen is introduced into the separator on the anode side. The gas diffusion layer on the anode side allows the reducing gas to be diffused and then introduced into the anode. The anode includes a catalyst component, a catalyst carrier carrying a catalyst for a fuel cell, and an electrolyte material (ionomer or the like) having proton conductivity. The catalyst carrier is often constituted from a carbon material. The oxidation reaction of the reducing gas occurs to generate protons and electrons on the catalyst component. For example, in a case in which the reducing gas is a hydrogen gas, the following oxidation reaction occurs.

H₂ → 2H⁺ + 2e⁻ (E₀ = 0 V)

The protons generated in the oxidation reaction are introduced into the cathode through the electrolyte material in the anode and the solid polymer electrolyte membrane. The electrons are introduced into an external circuit through the catalyst carrier, the gas diffusion layer, and the separator. The electrons are worked (generate electricity) in an external circuit, and then introduced into the separator on the cathode side. The electrons are then introduced into the cathode through the separator on the cathode side and the gas diffusion layer on the cathode side.

The solid polymer electrolyte membrane is constituted from an electrolyte material having proton conductivity. The solid polymer electrolyte membrane introduces the protons generated in the oxidation reaction into the cathode.

An oxidizing gas such as an oxygen gas or air is introduced into the separator on the cathode side. The gas diffusion layer on the cathode side allows the oxidizing gas to be diffused and then introduced into the cathode. The cathode includes a catalyst component, a catalyst carrier carrying the catalyst component, and an electrolyte material (ionomer) having proton conductivity. The catalyst carrier is often constituted from a carbon material. The reduction reaction of the oxidizing gas occurs to generate water on the catalyst component. For example, in a case in which the oxidizing gas is an oxygen gas or air, the following reduction reaction occurs.

O₂+4H⁺+4e⁻→2H₂O (E₀ = 1.23 V)

The water generated in the reduction reaction is discharged together with the unreacted oxidizing gas, outside the fuel cell. Thus, the solid polymer fuel cell generates electricity by use of the difference in energy (difference in potential) between the oxidation reaction and the reduction reaction. In other words, the electrons generated in the oxidation reaction work in the external circuit.

Meanwhile, use of porous carbon black in catalyst carriers has been conventionally proposed from the viewpoint of electricity generation performance of fuel batteries.

Non-Patent Literature 1 reports that a catalytic metal carried in a pore formed inside of porous carbon black does not receive reaction inhibition (poisoning) due to covering with an ionomer co-existing in a catalyst layer and thus is highly active.

Patent Literature 1 proposes porous carbon black having an average particle size of from 20 to 100 nm, in which the volume of a hole having a hole diameter of from 4 to 20 nm in the porous carbon black is from 0.23 to 0.78 cm³/g.

Patent Literature 2 proposes a method including contacting a carbon black starting material and an oxidant in a fluidized bed, as a method including making carbon black porous to increase the surface area.

Conventionally, high crystallization of porous carbon black by firing has been proposed from the viewpoint of duration performance of fuel batteries.

Patent Literature 3 proposes high-crystalline carbon black having a BET specific surface area of from 300 to 700 m²/g and a crystallite size Lc of 2.0 nm or more in order to impart durability.

Patent Literature 4 proposes porous carbon in which the Lc (002) is 2.0 nm or more, the ratio D/G of the peak area of a D1-band (1350 cm⁻¹) with respect to the peak area of a G-band (1590 cm⁻¹) in a spectrum of a carbon surface by a Raman spectrometric method is from 0.5 to 2.5, the porous carbon has a pore including a mesopore, and the mesopore volume is from 0.35 to 1.3 cm³/g.

In particular, porous carbon black used for positive electrodes exhibits a high potential in air or water in which oxygen is contained, and thus oxidative consumption of carbon progresses. In order to suppress this, Patent Literature 3 to Patent Literature 4 propose an increase in crystallinity of carbon by heat treatment of porous carbon black at a high temperature.

Patent Literature 1 described above states that, as long as the average particle size of the porous carbon black is from 20 to 100 nm, mechanical strength can be kept even in a case in which a hole structure is provided in the porous carbon black.
Patent Literature 1: Japanese Patent Application Laid-Open (JP-A) No. 2013-109856
Patent Literature 2: JP-A No. 2017-052967
Patent Literature 3: Japanese Patent Publication (JP-B) No. 6478677
Patent Literature 4: WO17/208742

Non-Patent Literature 1: Kongkanand et al., ACS Energy Lett. 2018, 3, 618-621

### SUMMARY OF INVENTION

### Technical Problem

However, conventional techniques including those in all documents described above have not been propositions capable of achieving both durability and low-humidity performance demanded in an application of heavy-duty vehicles (hereinafter, also referred to as "HDVs").

For example, in Patent Literature 1, mechanical strength necessary for a carbon material for a catalyst carrier can be kept with carbon black which is made porous and thus has high electricity generation performance including low-humidity performance and also a moderately large average primary particle size. However, such performance cannot be said to be sufficient performance for an HDV application in which durability and low-humidity performance are demanded to be well balanced. In particular, Patent Literature 1 proposes an average particle size of from 20 to 100 nm in terms of the particle size, but merely exemplifies carbon black having a particle size of 30 nm in Examples. Patent Literature 1 also does not exemplify any solution for making carbon black having an average primary particle size of more than 30 nm porous, at all. Although characteristics have been examined by heat treatment of the carbon black having a particle size of 30 nm, exemplified in Examples, at various temperatures, both durability and low-humidity performance have not been able to be achieved at high levels.

For example, in Patent Literature 3, although durability can be increased by the carbon black graphitized, the surface is lowered in hydrophilicity and low-humidity performance cannot be avoided from being lowered.

Patent Literature 3 proposes porous carbon black that is heat-treated to achieve both high electricity generation performance due to pore making and high durability due to high crystallization. However, it has been found according to supplementary examinations by the present inventors that both durability and low-humidity performance are difficult to achieve at high levels only by constituent requirements proposed.

An object of the disclosure is then to provide a carbon material for a catalyst carrier of a solid polymer fuel cell, in which both high durability and low-humidity performance are achieved, as well as a catalyst layer for a solid polymer fuel cell, and a fuel cell, in which the carbon material is utilized.

### Solution to Problem

Solutions for solving the problems include the following aspects.
<1> A carbon material for a catalyst carrier of a solid polymer fuel cell, the carbon material including porous activated carbon black satisfying the following requirements (A), (B), (C), and (D):
   (A) an average primary particle size is from more than 30 nm to 100 nm,
   (B) a BET specific surface area is from 350 m²/g to 800 m²/g,
   (C) Lc (002) obtained by analyzing a peak at a diffraction angle 2θ of from 20° to 26.5° in an XRD spectrum obtained with XRD (X-ray diffraction) measurement is from 1.7 nm to 4.0 nm, and
   (D) La (110) obtained by analyzing a peak at a diffraction angle 2θ of from 70° to 80° in the XRD spectrum obtained with XRD (X-ray diffraction) measurement is 3.5 nm or less.
<2> The carbon material for a catalyst carrier of a solid polymer fuel cell according to <1>, wherein the following requirement (E) is further satisfied:
   (E) a ratio (Lc (002)/La (110)) between the Lc (002) and the La (110) is from 0.6 to 1.2.
<3> The carbon material for a catalyst carrier of a solid polymer fuel cell according to <1> or <2>, wherein the average primary particle size is from 40 nm to 100 nm.
<4> A catalyst layer for a solid polymer fuel cell, the catalyst layer including the carbon material for a catalyst carrier of a solid polymer fuel cell according to any one of <1> to <3>.
<5> A fuel cell including the catalyst layer for a solid polymer fuel cell according to <4>.
<6> The fuel cell according to <5>, wherein the catalyst layer for a solid polymer fuel cell is a catalyst layer on a cathode side.

### Advantageous Effects of Invention

According to the disclosure, a carbon material for a catalyst carrier of a solid polymer fuel cell, in which both high durability and low-humidity performance are achieved, as well as a catalyst layer for a solid polymer fuel cell, and a fuel cell, in which the carbon material is utilized, are provided.

### BRIEF DESCRIPTION OF DRAWING

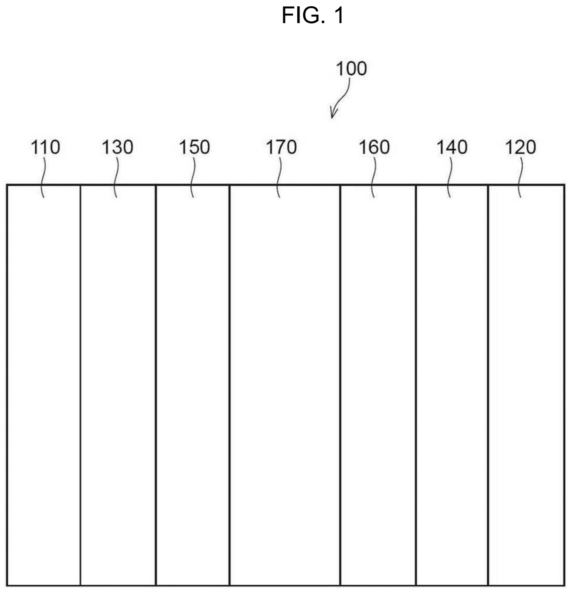

[FIG. 1] FIG. 1 is a schematic view illustrating one example of an outline configuration of the fuel cell of the disclosure.

### DESCRIPTION OF EMBODIMENTS

A numerical value range represented by "(from) ... to ..." in the disclosure means that the range encompasses respective numerical values described before and after "to" as a lower limit and an upper limit. A numerical value range in the case of "more than" or "less than" attached to a numerical value described before or after "to" means that such a numerical value is not included as a lower limit value or an upper limit value.

The term "step" in the disclosure encompasses not only an independent step, but also a step that can achieve a predetermined object even in the case of being not clearly distinguished from other steps.

In the disclosure, the "electrolyte material having proton conductivity" used in the catalyst layer of the fuel cell is also referred to as "ionomer".

### <Carbon Material for Catalyst Carrier of Solid Polymer Fuel Cell>

The carbon material for a catalyst carrier of a solid polymer fuel cell of the disclosure includes porous activated carbon black satisfying requirements (A), (B), (C), and (D) described later.

The porous activated carbon black here means carbon black made porous by activation. The porous activated carbon black is also referred to as "porous carbon black".

The carbon material for a catalyst carrier of the disclosure is a carbon material in which both high durability and low-humidity performance are achieved. The carbon material of the disclosure has been found based on the following findings.

In conventional techniques, porous carbon black is generally heat-treated and thus formed into larger crystallites and enhanced in durability, but such larger crystallites lessen edges in which functional groups can be present, thereby causing disappearance of micropores and decreases in specific surface areas. In a case in which such micropores and the specific surface areas decrease, catalytic metals are hardly highly dispersed and carried as fine particles. Therefore, large particles or aggregated catalytic metals are carried, thereby resulting in a tendency to decrease the specific surface areas of catalytic metals and also a tendency to decrease electricity generation performance. Such micropores and edges are lessened to result in a decrease in adsorption density of adsorption water, and thus are easily affected by weakening of adsorption water networks capable of propagating protons by desorption of adsorption water under a lowered relative humidity, and low-humidity performance tends to decrease.

In order to prevent these, a decrease in specific surface area and disappearance of a micropore are tried to be prevented by making porous carbon black further porous. However, such further pore making highly tends to reduce the Lc (002) of a crystallite, and heat treatment at a relatively high temperature is necessary for imparting required durability. As a result, the La (110) increases, thereby leading to a decrease in edge density and a decrease in low-humidity performance.

The inventors have made studies, and as a result, have found that structural requirements for achievement of both high durability and low-humidity performance demanded in an HDV application are as follows.
(1) A catalytic metal has a high specific surface area to such an extent as to have an inside pore so that the catalytic metal can be finely dispersed to allow high electricity generation performance to be obtained.
(2) The magnitude of Lc (002) is a certain value or more so that high durability is obtained.
(3) The edge density at a certain value or more is required for allowing high low-humidity performance to be obtained, and the magnitude of La (110) is thus not so as to be a certain value or more.

A primary particle of carbon black is constituted with a collected body of layered bodies (crystallites) of carbon net sheets, and these crystallites are oriented concentrically (in an onion-like manner). These crystallites tend to be larger in size as these are closer to the outer periphery of the primary particle and smaller in size sequentially toward the center of the primary particle, and such a central portion is often constituted in an amorphous state low in crystallinity. These crystallites, even in a relatively high-crystalline portion of the outer periphery, are mutually bound in the form of a structure low in crystallinity, and take a structure having relatively many defects as compared with that of hexagonal net sheets constituting such a crystallite. Such primary particles are beaded by fusion of plural such primary particles in the course of production of the carbon black, and take a steric structure called aggregate.

This steric structure generates a void network between such aggregates in a catalyst layer in a case in which the carbon black is used as a catalyst carrier of a fuel cell. This void network serves to diffuse hydrogen in the case of an anode or oxygen in air and generated water in the case of a cathode during electricity generation.

In a case in which carbon black having such a structure is adopted as a raw material and such raw material carbon black is activated for the purposes of pore making and an increase in specific surface area, a structure portion with many defects between crystallites constituting a portion close to the outer periphery of a primary particle of the raw material carbon black is oxidatively consumed and formed into a micropore. In a case in which such activation is allowed to progress for a long time in order to obtain a sufficient specific surface area, an activation agent diffusing a micropore produced in a portion close to the outer periphery oxidatively consumes an amorphous portion located inside, thereby providing a hollow structure in which an outer periphery with a relatively large crystallite remains and serves as an outer shell. Such a crystallite in the outer shell is here also partially oxidatively consumed. In a case in which excess activation is performed, oxidative consumption of such a crystallite constituting the outer shell may progress, thereby leading to disappearance of the primary particle by oxidative consumption.

Porous carbon black having a hollow shape can carry a catalytic metal in a space formed inside. Since an ionomer co-existing during formation of a catalyst layer hardly penetrates in the space in porous carbon black moderately activated, the catalytic metal carried inside hardly receives reaction inhibition due to ionomer adsorption, and a high-performance fuel cell can be obtained in which the reaction overvoltage in the oxygen/reduction reaction particularly progressing in the cathode can be smaller.

In general, raw material carbon black having a smaller average primary particle size is more easily activated because an outer shell constituted from a crystallite is smaller and the size of the crystallite constituting the outer shell is also larger. Even a conventional technique has relatively simply enabled raw material carbon black to be made porous and increased in specific surface area. However, porous carbon black, which is obtained by activating of raw material carbon black having a small particle size, cannot provide sufficient durability in view of achievement of both high durability and low-humidity performance demanded in an HDV application. The reason is because the crystallite constituting the remaining outer shell is so small with respect to objective durability that the thickness of the outer shell of the particle having the resulting hollow structure is small. The reason is also because a primary particle of the raw material carbon black easily disappears and a void in a catalyst layer, capable of diffusing a gas, is lost by oxidative consumption progressing under an environment in which a fuel cell is used.

In a case in which excess heat treatment, as a countermeasure therefor, is performed to enlarge a crystallite as much as possible and hardly cause oxidation, disappearance of a micropore and an edge occurs, thereby leading to a decrease in specific surface area and a decrease in low-humidity performance. In this regard, raw material carbon black whose average primary particle size is a certain value or more tends to be originally constituted from a large crystallite and thus can be expected to allow a large crystallite to remain even in the case of progress of activation. However, raw material carbon black whose average primary particle size is a certain value or more tends to usually include a large crystallite in the vicinity of an outer surface and also have a large-thickness outer shell constituted from such a crystallite. Therefore, it is difficult to make a pore so as to provide a sufficiently large specific surface area and it is difficult for conventional techniques to satisfy the structural requirement with raw material carbon black whose average primary particle size is a certain value or more.

The inventors have made studies and have obtained the following findings.

In a case in which raw material carbon black having a relatively large average primary particle size (more than 30 nm) is treated in the order of "first activation", "graphitization", and "second activation" and the "first activation" is slow activation at a low temperature with the flow speed being finely varied under pressurization, the structural requirement is satisfied. In particular, in the first activation, the flow speed is finely varied under pressurization, whereby, even in the case of a large particle, a "portion low in crystallinity", which is present between crystallites, can be oxidatively consumed and an atmosphere in a defect (pore) occurring by such oxidative consumption can be rapidly replaced with an activation gas, and it is thus presumed that even a large particle can be efficiently made porous.

In a case in which such a method is used to subject carbon black having a relatively large average primary particle size (more than 30 nm) to the first activation, required durability can be kept even in the case of no excess heat treatment performed in graphitization subsequently performed. Carbon black having a relatively large average primary particle size (more than 30 nm) can be used to allow for an increase in Lc (002) even without any excess heat treatment performed, whereby it is thus presumed that durability can be kept and growth of La (110) can be suppressed due to graphitization at a relatively low temperature, and thus a decrease in low-humidity performance can be suppressed.

It has been found from the above findings that the carbon material for a catalyst carrier of the disclosure is a carbon material in which both high durability and low-humidity performance are achieved.

Hereinafter, requirements (A), (B), (C), and (D) are described.

The carbon material for a catalyst carrier of the disclosure preferably satisfies not only requirements (A), (B), (C), and (D), but also requirement (E) from the viewpoint of achieving both further high durability and low-humidity performance.

### (Requirement (A))

(A) The average primary particle size is from more than 30 nm to 100 nm.

In a case in which the average primary particle size of porous carbon black is from more than 30 nm to 100 nm, durability demanded in an HDV application in which the total travel distance is relatively short can be obtained.

An average primary particle size of porous carbon black of 30 nm or less leads to low durability and is not suited for most HDV applications.

An average primary particle size of porous carbon black of from 40 nm to 100 nm is more preferred because durability demanded also in an HDV application in which the total travel distance is relatively long can be obtained.

In this regard, an average primary particle size of porous carbon black of more than 100 nm is not preferred because it is conceived that a structure of porous carbon black satisfying requirements (B) to (E) is hardly substantially obtained.

The average primary particle size is a value measured by a method described in Examples below.

### (Requirement B)

(B) The BET specific surface area is from 350 m²/g to 800 m²/g.

A BET specific surface area of porous carbon black of from 350 m²/g to 800 m²/g is preferred because a catalytic metal carried can be carried in a well-dispersed manner at objective carrying rate and particle size falling within practical ranges and porous carbon black can take a crystallite structure necessary for obtaining durability demanded in a fuel cell.

A BET specific surface area of porous carbon black of less than 350 m²/g leads to an increase in catalytic metal particle size and aggregation of catalytic metal particles at an increased carrying rate of a catalytic metal, thereby hardly allowing high cell performance to be obtained.

A BET specific surface area of porous carbon black of 800 m²/g or more, although allows high electricity generation performance to be obtained, tends not to allow a crystallite structure necessary for allowing porous carbon black to keep durability to be obtained, thereby making achievement of both high durability and low-humidity performance difficult.

The BET specific surface area of porous carbon black is preferably from 400 m²/g to 700 m²/g.

The BET specific surface area is a value measured by a method described in Examples below.

### (Requirement (C))

(C) The Lc (002) obtained by analyzing a peak at a diffraction angle 2θ of from 20° to 26.5° in an XRD spectrum obtained with XRD (X-ray diffraction) measurement is from 1.7 nm to 4.0 nm.

In a case in which the Lc (002) of porous carbon black is from 1.7 nm to 4.0 nm, both durability and low-humidity performance can be achieved.

In a case in which the Lc (002) of porous carbon black is less than 1.7 nm, durability tends to be deficient.

In a case in which the Lc (002) of porous carbon black is more than 4.0 nm, the specific surface area of porous carbon black tends to be small and electricity generation performance tends to be deficient.

The Lc (002) of porous carbon black is more preferably from 1.7 nm to 3.5 nm.

The Lc (002) is a value measured by a method described in Examples below.

### (Requirement (D))

(D) The La (110) obtained by analyzing a peak at a diffraction angle 2θ of from 70° to 80° in the XRD spectrum obtained with XRD (X-ray diffraction) measurement is 3.5 nm or less.

In a case in which the La (110) of porous carbon black is 3.5 nm or less, not only high durability is kept, but also electricity generation performance, in particular, low-humidity characteristics can be maintained at levels necessary for HDV.

In a case in which the La (110) of porous carbon black is more than 3.5 nm, the edge density (amount of edge per specific surface area) of a crystallite constituting the carbon black is lowered and adsorption water is hardly on a carbon black surface in a state of a lowered relative humidity, whereby low-humidity performance tends to be lowered.

The lower limit of the La (110) of porous carbon black is not particularly limited as long as required durability is obtained. The lower limit of the La (110) of porous carbon black, based on determination from the data substantially obtained, is 2.0 nm or more. It is presumed that the possibility in which the La (110) is less than 2.0 nm and the Lc (002) is 1.7 nm or more in porous carbon black is low.

The La (110) of porous carbon black is preferably 3.0 nm or less.

The La (110) is a value measured by a method described in Examples below.

### (Requirement (E))

(E) The ratio (Lc (002)/La (110)) between the Lc (002) and the La (110) is from 0.6 to 1.2.

In a case in which the ratio (Lc (002)/La (110)) of porous carbon black is from 0.6 to 1.2, both high durability and low-humidity performance tend to be easily achieved.

In a case in which the ratio (Lc (002)/La (110)) of porous carbon black is 0.6 or more, the thickness of the outer shell of a porous carbon black primary particle is inhibited from being excessively thin, and durability is enhanced. Thus, mechanical strength of a catalyst layer formed is sufficiently obtained, and collapse of a void in such a catalyst layer hardly occurs in a case in which electricity generation is continued. The edge density with respect to the size of a net sheet also increases, and low-humidity performance at a lowered relative humidity is enhanced.

In a case in which the ratio (Lc (002)/La (110)) of porous carbon black is 1.2 or less, the edge density with respect to the size of a net sheet is moderate and durability is enhanced. Thus, oxidative consumption in use of a fuel cell hardly occurs and durability tends to be easily obtained.

The ratio (Lc (002)/La (110)) of porous carbon black is preferably from 0.65 to 1.1.

The ratio (Lc (002)/La (110)) is a value measured by a method described in Examples below.

### <Method of Producing Carbon Material for Catalyst Carrier of Solid Polymer Fuel Cell>

Hereinafter, one example of the method of producing the carbon material for a catalyst carrier of a solid polymer fuel cell of the disclosure (hereinafter, also referred to as "method of producing the carbon material") is described.

The method of producing the carbon material of the disclosure is a method in which raw material carbon black having a relatively large average primary particle size (30 nm or more) is treated in the order of "first activation", "graphitization", and "second activation" and the "first activation" is slow activation at a low temperature with the flow speed being finely varied under pressurization.

According to the method of producing the carbon material of the disclosure, a carbon material satisfying the requirement (A) to the requirement (D), preferably, a carbon material carbon material (namely, porous activated carbon black) satisfying not only the requirement (A) to the requirement (D), but also the requirement (E) is obtained.

Hereinafter, the detail of the method of producing the carbon material of the disclosure is described.

In the first activation, an activation gas is "pressurized" and the flow speed is "finely varied", whereby, even in the case of large raw material carbon black, a "portion low in crystallinity", which is present between crystallites, can be oxidatively consumed and an atmosphere in a defect (pore) occurring by such oxidative consumption can be rapidly replaced with the activation gas, and therefore even large raw material carbon black can be efficiently made porous.

In the graphitization performed after the first activation, heat treatment is performed under an inert atmosphere, thereby growing a crystallite constituting the raw material carbon black undergoing the first activation step and imparting durability demanded in a fuel cell. In a case in which raw material carbon black having a relatively large average primary particle size (more than 30 nm) is subjected to the first activation, required durability can be kept even in a case in which excess heat treatment is not performed in the graphitization subsequently performed. Such raw material carbon black having a relatively large average primary particle size (more than 30 nm) can be used to allow for large Lc (002) to be kept, whereby durability can be kept, growth of the La (110) can be suppressed due to graphitization at a relatively low temperature, and a decrease in low-humidity performance can be suppressed.

The second activation has the effect of increasing the specific surface area and the pore volume decreased due to graphitization treatment, by again opening a pore clogged by the graphitization. A case in which the second activation is not performed is not preferred because sufficient specific surface area and pore volume tend not to be obtained.

The type of the activation gas in each of the first activation and the second activation is not particularly limited as long as such a gas contains a gas capable of oxidatively consuming carbon constituting raw material carbon black by a reaction. Examples of the gas capable of oxidatively consuming carbon constituting raw material carbon black by a reaction can include air, oxygen, ozone, water vapor, carbon dioxide, nitrogen dioxide, nitrogen monoxide, and dinitrogen monoxide. Such gases may be mixed and the mixture may be adopted as the activation gas. A gas diluted with an inert gas such as nitrogen, argon, or helium may also be adopted. An exhaust gas containing such gas(es) may also be adopted. A preferred activation gas is water vapor or carbon dioxide, or contains such gas(es). The type of the gas in the first activation may be different from that in the second activation.

The pressure of the activation gas is preferably increased at least in a reaction vessel in which the first activation is performed. A preferred range in such an increase in pressure is, for example, more than 0.0 MPaG as an indicated value (gauge pressure) of a pressure meter disposed downstream of the reaction vessel because the effects can be expected, and is more preferably from 0.1 MPaG to 0.9 MPaG. Such a range can allow even large carbon black to be made porous until an objective high specific surface area is achieved. In a case in which the pressure is less than 0.1 MPaG, the effects are exerted, but a required specific surface area cannot be sometimes achieved. Also, in a case in which the pressure is more than 0.9 MPaG, the effects tend to be more strongly exerted, but the effects tend to be saturated. The pressure is more preferably from 0.1 MPaG to less than 0.5 MPaG. Such a range can allow carbon black having an average primary particle size of from 30 nm to 100 nm to be efficiently made porous until an objective high specific surface area is achieved.

The average flow speed of the activation gas in a reaction vessel in which activation of each raw material carbon black in the first activation and the second activation is performed preferably corresponds to the amount of the gas to be fed in a sufficient amount with respect to the mass of raw material carbon black filled in the reaction vessel. The value of W/F wherein the mass of raw material carbon black filled in the reaction vessel is W (g) and the average flow speed of the activation gas fed, in a standard state (0°C, 1 atm), is F (Nml/min.) is preferably from 0.005 to 0.1 because an ununiform activation reaction is suppressed.

A value of W/F is less than 0.005 is not preferred because an activation reaction of raw material carbon black near the downstream of such a reactor does not progress as compared with that near the upstream thereof, and a portion occurs in which the specific surface area is locally small.

A value of W/F of more than 0.1 leads to an excess proportion of the unreacted activation gas and is not cost-effective. The value is more preferably from 0.01 to 0.05. Such a range is preferred because the difference in specific surface area between the upstream and the downstream of such a reactor is sufficiently small.

The activation gas is varied in flow speed around the average flow speed in each reaction vessel in which the first activation and the second activation are performed. Such variations can allow a particle inside to be efficiently made porous and have a hollow structure even in the case of raw material carbon black having a large average primary particle size. This is presumed to be the effect of enabling such variations to efficiently discharge a product gas produced by the activation reaction in a pore produced in the activation reaction outside the pore, and enabling the concentration of the activation gas to be increased.

The width of variation is preferably from a range of ±2% to a range of ±50% with respect to the average flow speed of the activation gas. Such a range can allow raw material carbon black having an average primary particle size of from 30 nm to 100 nm to be efficiently made porous until an objective high specific surface area is achieved.

In a case in which the width of variation is less than 2%, a target specific surface area cannot be sometimes achieved.

In a case in which the width of variation is more than 50%, pressure control may be difficult in a case in which the activation gas is pressurized.

The frequency of variation is preferably from 1 to 30 times per minute. Such a range can allow raw material carbon black having an average primary particle size of from 30 nm to 100 nm to be efficiently made porous until an objective high specific surface area is achieved.

In a case in which the frequency of variation is less than 1 time per minute, the effect of variation is hardly obtained and a case can occur in which a target specific surface area cannot be achieved. In a case in which the frequency of variation is more than 30 times, pressure control may be difficult in a case in which the activation gas is pressurized.

The atmosphere of the graphitization performed between the first activation and the second activation is not particularly limited as long as it is in an inert gas or in vacuum in which no carbon is consumed. Examples of the inert gas include N₂, Ar, and He.

The graphitization temperature is preferably a bare minimum temperature at which crystal growth at a level providing required durability can be performed. The graphitization temperature is, for example, from 1400°C to 2000°C.

In a case in which the graphitization temperature is less than 1400°C, long-time treatment is required for providing required durability, or crystal growth providing sufficient durability cannot be desired even by long-term retention.

In a case in which the graphitization temperature is more than 2000°C, excess crystal growth occurs and low-humidity performance can decrease in the case of carbon black. The temperature is more preferably from 1500°C to 1900°C.

### <Catalyst Layer for Solid Polymer Fuel Cell and Solid Polymer Fuel Cell>

A solid polymer fuel cell is described together with the catalyst layer for a solid polymer fuel cell of the disclosure.

The carbon material of the disclosure can be applied to, for example, catalyst layers 150 and 160 provided in a solid polymer fuel cell 100 illustrated in FIG. 1. FIG. 1 is a schematic view illustrating one example of an outline configuration of the fuel cell of the disclosure.

The solid polymer fuel cell 100 illustrated in FIG. 1 includes separators 110 and 120, gas diffusion layers 130 and 140, catalyst layers 150 and 160, and an electrolyte membrane 170.

The separator 110 is a separator on the anode side, and introduces a reducing gas such as hydrogen to the gas diffusion layer 130. The separator 120 is a separator on the cathode side, and introduces an oxidizing gas such as an oxygen gas or air to a gas diffusion aggregation phase. The separators 110 and 120 are not particularly limited in terms of type as long as these are each a separator used for a conventional fuel cell (for example, solid polymer fuel cell).

The gas diffusion layer 130 is a gas diffusion layer on the anode side, and diffuses the reducing gas supplied from the separator 110 and then supplies the reducing gas to the catalyst layer 150. The gas diffusion layer 140 is a gas diffusion layer on the cathode side, and diffuses the reducing gas supplied from the separator 120 and then supplies the reducing gas to the catalyst layer 160. The gas diffusion layers 130 and 140 are not particularly limited in terms of type as long as these are each a gas diffusion layer used for a conventional fuel cell (for example, solid polymer fuel cell). Examples of the gas diffusion layers 130 and 140 include porous carbon materials (carbon cloth, carbon paper, and the like) and porous metal materials (metal mesh, metal wool, and the like). Preferred examples of the gas diffusion layers 130 and 140 include a gas diffusion layer of a two-layered structure. Specific examples include a gas diffusion layer of a two-layered structure in which a layer located on each of the separators 110 and 120 sides is a gas-diffusive fiber layer with a fibrous carbon material as a main component and a layer located on each of the catalyst layers 150 and 160 sides is a microporous layer with carbon black as a main component, in each of the gas diffusion layers 130 and 140.

The catalyst layer 150 is a so-called anode. An oxidation reaction of a reducing gas occurs to generate a proton and an electron in the catalyst layer 150. For example, in a case in which the reducing gas is a hydrogen gas, the following oxidation reaction occurs.

H₂→2H⁺+2e⁻ (E₀ = 0 V)

Protons generated by the oxidation reaction pass through the catalyst layer 150 and the electrolyte membrane 170, and reach the catalyst layer 160. Electrons generated by the oxidation reaction pass through the catalyst layer 150, the gas diffusion layer 130, and the separator 110, and reach an external circuit. The electrons work (generate electricity) in the external circuit, and then are introduced to the separator 120. Thereafter, the electrons pass through the separator 120 and the gas diffusion layer 140, and reach the catalyst layer 160.

The configuration of the catalyst layer 150 serving as the anode is not particularly restricted. The configuration of the catalyst layer 150 may be the same as that of a conventional anode, may be the same as that of the catalyst layer 160, or may be a configuration higher in affinity than that of the catalyst layer 160.

The catalyst layer 160 is a so-called cathode. A reduction reaction of an oxidizing gas occurs to generate water in the catalyst layer 160. For example, in a case in which the oxidizing gas is an oxygen gas or air, the following reduction reaction occurs. Water generated in the oxidation reaction is discharged to the outside of the solid polymer fuel cell 100, together with the unreacted oxidizing gas.

O₂+4H⁺+4e⁻→2H₂O (E₀ = 1.23 V)

Thus, the solid polymer fuel cell 100 generates electricity by use of the difference in energy (difference in potential) between the oxidation reaction and the reduction reaction. In other words, the electrons generated in the oxidation reaction work in the external circuit.

The catalyst layer 160 includes the carbon material for a catalyst carrier of the disclosure. In other words, the catalyst layer 160 includes the carbon material for a catalyst carrier of the disclosure, an electrolyte material (ionomer or the like), and a catalyst component (platinum or the like). Thus, the catalyst layer 160 can be enhanced in durability and low-humidity performance. The solid polymer fuel cell 100 can be then enhanced in durability and low-humidity performance.

The catalyst carrying rate in the catalyst layer 160 is not particularly restricted, and is preferably from 30% by mass to less than 80% by mass. In a case in which the catalyst carrying rate is in this range, durability and low-humidity performance are further enhanced. The catalyst carrying rate is here represented by the percentage by mass of a catalyst component with respect to the total mass of a catalyst-carrying particle (particle in which the catalyst component is carried on the carbon material for a catalyst carrier). In a case in which the catalyst carrying rate is less than 30% by mass, a need for thickening the catalyst layer 160 can occur so that the solid polymer fuel cell 100 can withstand practical use. In this regard, in a case in which the catalyst carrying rate is 80% by mass or more, catalyst aggregation easily occurs. The catalyst layer 160, which is too thin, can give rise to the possibility of flooding.

The mass ratio I/C between the mass I of the electrolyte material and the mass C of the carbon material for a catalyst carrier in the catalyst layer 160 is not particularly restricted, and is preferably from more than 0.5 to less than 5.0. In this case, both a pore network and an electrolyte material network can be achieved, and durability and low-humidity performance are enhanced. In this regard, in a case where the mass ratio I/C is 0.5 or less, the electrolyte material network is weak, resulting in a tendency to enhance proton conduction resistance. In a case in which the mass ratio I/C is 5.0 or more, the pore network can be divided by the electrolyte material. In each case, durability and low-humidity performance can decrease.

The thickness of the catalyst layer 160 is not particularly restricted, and is preferably from more than 5 µm to less than 20 µm. In this case, the oxidizing gas easily diffuses and flooding hardly occurs in the catalyst layer 160. In a case in which the thickness of the catalyst layer 160 is 5 µm or less, flooding easily occurs. In a case in which the thickness of the catalyst layer 160 is 20 µm or more, the oxidizing gas hardly diffuses in the catalyst layer 160, and the catalyst component near the electrolyte membrane 170 hardly moves. In other words, the rate of catalyst utilization can decrease.

The electrolyte membrane 170 is constituted from an electrolyte material having proton conductivity. The electrolyte membrane 170 allows protons generated in the oxidation reaction to be introduced to the catalyst layer 160 (cathode). The electrolyte material is not particularly limited in terms of type as long as it is an electrolyte material used for conventional fuel batteries, for example, solid polymer fuel batteries. Suitable examples of the electrolyte material include an electrolytic resin. Examples of the electrolytic resin include a polymer into which a phosphoric acid group, a sulfonic acid group, or the like is introduced. Specific examples include a perfluorosulfonic acid polymer, and a polymer into which benzenesulfonic acid or the like is introduced. Of course, the electrolyte material may also be any other electrolyte material. Examples of such an electrolyte material include inorganic, and inorganic-organic hybrid electrolyte materials. The solid polymer fuel cell 100 may also be a fuel cell to be operated in a range of from ordinary temperature (25°C) to 150°C.

### <Method of Producing Solid Polymer Fuel Cell>

The method of producing the solid polymer fuel cell 100 is not particularly restricted as long as it is the same production method as conventional one. However, the carbon material for a catalyst carrier of the disclosure is used for the catalyst carrier. The carbon material for a catalyst carrier of the disclosure is preferably used for the catalyst carrier at least in the catalyst layer 160 serving as a cathode, of the catalyst layers 150 and 160. Of course, the carbon material for a catalyst carrier of the disclosure may also be used in each of both the catalyst layers including the catalyst layer 150 serving as an anode and the catalyst layer 160 serving as a cathode.

### Examples

Experiment Examples of the carbon material for a catalyst carrier of the disclosure are described. First, the method of measuring each parameter is described.

### <Method of Measuring each Parameter>

### (Measurement of Average Primary Particle Size)

The carbon material for a catalyst carrier was observed at from any 10 visual fields to 20 visual fields with a flatbed scanning electron microscope (SEM), and an observation image was obtained. The longest distance between two points on a profile line of the carbon material for a catalyst carrier, with respect to particles which were present at 30 intersection points or which were most adjacent, occurring in placement of 6 longitudinal straight lines and 5 horizontal straight lines at equal intervals in each visual field in the observation image, was defined as the particle size (diameter), and the average value of such 300 particles was defined as the average primary particle size.

### <Measurement of BET Specific Surface Area>

The carbon material for a catalyst carrier was formed into a specimen, about 30 mg of the specimen was weighed and taken, and dried in vacuum at 200°C for 2 hours, and thereafter a nitrogen gas adsorption/desorption isotherm was measured with an automatic specific surface area measurement apparatus (AUTOSORB iQ manufactured by Anton Paar Japan) by use of a nitrogen gas as an adsorbate. BET analysis was carried out in a range of relative pressure of 0.30 or less in the adsorption isotherm, and the BET specific surface area was calculated.

### (Measurement of Lc (002) and La (110))

The carbon material for a catalyst carrier was formed into a specimen, and the specimen was weighed and taken in an amount of about 3 mg, put on a silicon non-reflective plate, set in an X-ray diffraction apparatus (RINT-TTRIII manufactured by Rigaku Corporation), and subjected to measurement at a scanning step of 0.02° and an angle sweep speed of 1°/min with Cu-Kα as a radiation source under an ordinary temperature. Each background in a 2θ range of from 10° to 40° and a 20 range of from 70 to 90° was removed and smoothing treatment was performed in the resulting XRD spectrum.

The XRD spectrum in a 20 range of from 10° to 40° was used to determine the Lc (002) with respect to the waveform after background removal and smoothing treatment, by use of the Scherrer formula (Lc = Kλ/βcosθ).

A diffraction peak present in a 2θ range of from 70 to 90° is one with mixing of the (110) plane, the (112) plane, and the (006) plane. In the XRD spectrum in a 2θ range of from 70 to 90°, a waveform of the Voigt function was set so that a waveform at a smaller angle side than a diffraction peak angle on the smallest angle side and a waveform of the Voigt function were matched (the square of the difference was minimized) in the waveform after background removal and smoothing treatment, and the resulting waveform of the Voigt function was used to determine the La (110) by use of the Scherrer formula (La = Kλ/βcosθ).

In the Scherrer formula, the shape factor K is 1, the X-ray wavelength λ is 1.54184 Å, and β represents a half-value width of a diffraction peak.

### <Examples: Production of Carbon Material for Catalyst Carrier>

### (Example 1)

### (1) First Activation

A tube-type reactor having a diameter of 1 inch was filled with 5 g of NITERON #10 (average primary particle size catalog value 39 nm) manufactured by NIPPON STEEL Carbon Co., Ltd., as raw material carbon black, and a CO₂ gas at 400 Nml/min. was allowed to flow with a mass flow controller located upstream of the tube-type reactor. A pressure controller (automatically controlled to the set pressure by a combination of a pressure sensor, a back pressure controller, and a control section), a needle valve, and a mass flow meter were placed in the listed order downstream of the tube-type reactor, and the back pressure was set so that the gauge pressure was 0.3 MPaG with the pressure controller. The degree of opening of the needle valve was regulated so that variation occurred at a frequency of variation of about 12 times/min. at a width of variation of about ±100 ml/min. around 400 Nml/min. as the indicated value by the mass flow meter located downstream. The tube-type reactor in this state was heated to 850°C at 20°C/min., and retained at 850°C for 34 hours, and thus first activation was performed. After retention, the flowing gas was switched to N₂, the temperature was dropped, and a first activation sample was recovered.

### (2) Graphitization

A graphite crucible was filled with the total amount of the first activation sample recovered, the temperature was raised at 15°C/min.in a graphitization furnace under flowing of Ar, graphitization treatment was performed at 1600°C for 1 hour, and a graphitization sample was recovered.

### (3) Second Activation

The tube-type reactor having a diameter of 1 inch was again filled with the total amount of the graphitization sample, and a CO₂ gas at 400 Nml/min. was allowed to flow with the mass flow controller located upstream of the tube-type reactor. The gauge pressure was here set to 0.0 MPaG with the pressure controller and the needle valve being fully opened. The tube-type reactor in this state was heated to 850°C at 20°C/min., and retained at 850°C for 3 minutes, and thus second activation was performed. After retention, the flowing gas was switched to N₂, the temperature was dropped, and a second activation sample was recovered as a carbon material for a catalyst carrier (namely, porous activated carbon black) of Example 1.

### (Example 2)

A carbon material for a catalyst carrier (namely, porous activated carbon black) was obtained in the same manner as in Example 1 except that the retention time of the second activation was 30 minutes.

### (Example 3)

A carbon material for a catalyst carrier (namely, porous activated carbon black) was obtained in the same manner as in Example 1 except that the width of variation and the retention time of the first activation were respectively about ±50 ml/min. and 37 hours.

### (Example 4)

A carbon material for a catalyst carrier (namely, porous activated carbon black) was obtained in the same manner as in Example 1 except that the raw material carbon black was NITERON #SH (average primary particle size catalog value 61 nm) manufactured by NIPPON STEEL Carbon Co., Ltd., the retention time of the first activation was 43 hours, the retention time of the graphitization was 1700°C, and the retention temperature and the retention time of the second activation were respectively 930°C and 30 minutes.

### (Example 5)

A carbon material for a catalyst carrier (namely, porous activated carbon black) was obtained in the same manner as in Example 1 except that the retention temperature and the retention time of the first activation were respectively 900°C and 20 hours, the retention time of the graphitization was 1800°C, and the retention temperature and the retention time of the second activation were respectively 950°C and 30 minutes.

### (Comparative Example 1)

A carbon material for a catalyst carrier (namely, porous activated carbon black) was obtained in the same manner as in Example 3 except that the needle valve was adjusted so that the width of variation of the first activation was about ±5 ml/min.

### (Comparative Example 2)

A carbon material for a catalyst carrier (namely, porous activated carbon black) was obtained in the same manner as in Example 5 except that the needle valve was adjusted so that the width of variation of the first activation was about ±5 ml/min.

### (Comparative Examples 3, 4, and 5)

Two g of Ketjen black EC300J (average primary particle size catalog value 39.5 nm) of Lion Specialty Chemicals Co., Ltd., as raw material carbon black, was graphitized in a graphitization furnace under flowing of Ar for 1 hour, thereby obtaining a carbon material for a catalyst carrier. One obtained at a retention temperature of 1400°C was adopted in Comparative Example 3, one obtained at a retention temperature of 1600°C was adopted in Comparative Example 4, and one obtained at a retention temperature of 1800°C was adopted in Comparative Example 5.

### (Comparative Examples 6, 7, and 8)

Two g of Ketjen black EC600JD (average primary particle size catalog value 34 nm) of Lion Specialty Chemicals Co., Ltd., as raw material carbon black, was graphitized in a graphitization furnace under flowing of Ar for 1 hour, thereby obtaining a carbon material for a catalyst carrier. One obtained at a retention temperature of 1400°C was adopted in Comparative Example 6, one obtained at a retention temperature of 1600°C was adopted in Comparative Example 7, and one obtained at a retention temperature of 1800°C was adopted in Comparative Example 8.

### (Comparative Examples 9 and 10)

A tube-type reactor having a diameter of 1 inch was filled with 2 g of the carbon material for a catalyst carrier in each of Comparative Example 5 and Comparative Example 8, and a CO₂ gas at 400 Nml/min. was allowed to flow with a mass flow controller located upstream of the tube-type reactor. The gauge pressure was here set to 0.0 MPaG with the pressure controller and the needle valve being fully opened. The tube-type reactor in this state was heated to 950°C at 20°C/min, and retained at 950°C for 30 minutes, and thus activation was performed. After retention, the flowing gas was switched to N₂, the temperature was dropped, and a sample recovered was adopted in each of Comparative Example 9 and Comparative Example 10.

### (Comparative Example 11)

A carbon material for a catalyst carrier was obtained in the same manner as in Example 5 except that the raw material carbon black was NITERON #300IH (average primary particle size catalog value 22 nm) manufactured by NIPPON STEEL Carbon Co., Ltd., the retention time of the first activation was 8 hours, the retention time of the graphitization was 1600°C, and the retention time of the second activation was 5 minutes.

### <Preparation of Catalyst, Preparation of Catalyst Layer, Production of MEA, Assembling of Fuel Cell, and Evaluation of Cell Performance (Electricity Generation Performance, Durability)>

The carbon material for a catalyst carrier of each Example was used to prepare a catalyst for a solid polymer fuel cell, on which a catalytic metal was carried, as follows, the catalyst obtained was used to prepare a catalyst layer ink liquid, then the catalyst layer ink liquid was used to form a catalyst layer, furthermore the catalyst layer formed was used to produce a membrane electrode assembly (MEA), the MEA produced was incorporated into a cell of a fuel cell, and an electricity generation test was performed with a fuel cell measurement apparatus. Hereinafter, preparation of each member and cell evaluation with the electricity generation test are described in detail.

### (1) Preparation of Catalyst (Platinum Carry Carbon Material) for Solid Polymer Fuel Cell

The carbon material for a catalyst carrier of each Example was dispersed in distilled water, formaldehyde was added to this dispersion liquid, the resultant was put in a water bath set to 40°C, and, once the temperature of the dispersion liquid reached the same temperature as that of the bath, 40°C, an aqueous nitric acid solution of a dinitrodiamine Pt complex was slowly poured into this dispersion liquid with stirring. Thereafter, stirring was continued for about 2 hours, thereafter filtration was performed, and the resulting solid was washed. The solid thus obtained was dried in vacuum at 90°C, then pulverized with a mortar, and then heat-treated in an argon atmosphere containing 5% by volume of hydrogen at 200°C for 1 hour, thereby producing a platinum-carried carbon material. The amount of platinum carried in the platinum-carried carbon material was adjusted to 35% by mass with respect to the total mass of the carbon material for a catalyst carrier and such a platinum particle, and was confirmed by measurement by inductively coupled plasma- atomic emission spectrometry (ICP-AES).

### (2) Preparation of Catalyst Layer

The platinum-carried carbon material (Pt catalyst) prepared as above was used, a 5% by mass Nafion solution (DE2020CS, (registered trademark): Nafion, manufactured by Du Pont) was used as an electrolytic resin, such Pt catalyst and Nafion were blended under an Ar atmosphere at a proportion of the mass of the Nafion solid content with respect to the mass of the porous carbon black content (the mass of only porous carbon black except for the Pt content in the Pt catalyst), of 1.0 time, and lightly stirred, thereafter the Pt catalyst was disintegrated with ultrasound, and ethanol was further added for adjustment so that the solid content concentration of the total thereof combined with the Pt catalyst and the electrolytic resin was 0.5% by mass, thereby preparing a catalyst layer ink liquid in which the Pt catalyst and the electrolytic resin were mixed.

The catalyst layer ink liquid thus prepared was used, spray conditions were regulated so that the mass per catalyst layer unit area of platinum (hereinafter, referred to as "basis weight of platinum".) was 0.18 mg/cm², the catalyst layer ink was sprayed on a Teflon ((registered trademark)) sheet, and then drying treatment at 120°C for 60 minutes in argon was performed, thereby producing a catalyst layer.

### (3) Production of MEA

The catalyst layer produced as above was used, and a MEA (membrane electrode composite) was produced by the following method.

A 6-cm-square-shaped electrolyte membrane was cut out from a Nafion membrane (NR211 manufactured by Du Pont). Respective catalyst layers on the anode and the cathode applied to the Teflon (registered trademark) sheet were cut out into a 2.5-cm-square shape with a cutter knife.

The electrolyte membrane was sandwiched between the respective catalyst layers on the thus cut out anode and cathode so that the respective catalyst layers not only were contacted with the central portion of the electrolyte membrane being interposed therebetween, but also were not mutually misaligned, the resultant was pressed at 120°C and 100 kg/cm² for 10 minutes and then cooled to room temperature, and thereafter only the Teflon (registered trademark) sheet was carefully released from each of the anode and the cathode, thereby preparing a catalyst layer-electrolyte membrane assembly in which the respective catalyst layers on the anode and the cathode were fixed to the electrolyte membrane.

Next, paired sheets of square-shaped carbon paper were cut out as gas diffusion layers at a 2.5-cm square size from carbon paper (39BC manufactured by SGL Carbon AG), the catalyst layer-electrolyte membrane assembly was sandwiched between these sheets of carbon paper so that the respective catalyst layers on the anode and the cathode were matched and not misaligned, and the resultant was pressed at 120°C and 50 kg/cm² for 10 minutes, thereby producing a MEA.

The basis weights of the catalytic metal component, each component in the carbon material and the electrolyte material in such each MEA produced were each obtained by determining the mass of the catalyst layer fixed to the Nafion membrane (electrolyte membrane) from the difference between the mass of the catalyst layer-attached Teflon ((registered trademark)) sheet before pressing and the mass of the Teflon ((registered trademark)) sheet released after pressing, and calculating the mass ratio in the composition of the catalyst layer.

### (4) Assembling of Fuel Cell, And Low-Humidity Performance Evaluation

The MEA produced with the carbon material for a catalyst carrier of each Example was incorporated into each cell, and put in a fuel cell measurement apparatus, and initial electricity generation performance evaluation of a fuel cell was performed by the following procedure.

Air was fed to the cathode side and pure hydrogen was fed to the anode so that the respective gauge pressures as the back pressures were each 0.1 MPaG by pressure regulation with a back pressure valve provided downstream of the cell so that the respective rates of utilization were 40% and 70%. The cell temperature was set to 80°C, and such air and pure hydrogen to be fed to a cell of a fuel cell were each allowed to pass in distilled water warmed at 80°C in a humidifier (namely, bubbling was performed), and thus humidified. Thus, the relative humidities of the anode and the cathode were each about 100%.

An operation for gradually increasing the current density until the voltage between cell terminals reached 0.3 V under a condition in which a reaction gas was fed to the cell under the above setting was repeated 10 times.

Next, the respective gauge pressures as the back pressures were so as to be each 0.05 MPaG by pressure regulation with the back pressure valve provided downstream of the cell. The cell temperature was set to 80°C, and air and pure hydrogen to be fed to the cell of the fuel cell were each allowed to pass in distilled water humidified in a humidifier (namely, bubbling was performed), thereby allowing the relative humidities of the anode and the cathode to be each about 50%.

An operation for gradually increasing the current density until the voltage between cell terminals reached 0.3 V under a condition in which a reaction gas was fed to the cell under the above setting was repeated 10 times

Thereafter, the voltage between cell terminals in retention at the current density fixed to 0.1 A/cm2 for 10 minutes was recorded, and low-humidity performance evaluation was performed according to the following criteria of Pass Ranks A and B and fail Rank C. The results are shown in Table 1.

### [Pass Rank]

A: One in which the voltage between cell terminals at a current density of 0.1 A/cm² is 0.84 V or more.
B: One in which the voltage between cell terminals at a current density of 0.1 A/cm² is 0.82 V or more.

### [Fail Rank]

C: One less than Pass Rank B.

### (5) Evaluation of Durability

After the above initial electricity generation performance evaluation, a duration test was performed in the following conditions. First, the cell temperature was set to 80°C, the relative humidity was set to 100%, the cell back pressure was set to 0.0 MPaG, and the gas of the cathode was switched to an argon gas. Next, a cycle in which an operation of retention at a cell voltage of 0.6 V for 4 seconds was performed and then an operation of retention at a cell voltage of 1.2 V for 4 seconds was defined as one cycle, and this repetition operation of the variation in voltage in a rectangular wave manner was carried out for 1000 cycles. Thereafter, the respective rates of gas utilization were set to 40% and 70%, the respective gauge pressures as the cell back pressures were each 0.1 MPaG, the respective cell temperatures were each 80°C, and the respective relative humidities were each 100% in the anode and the cathode, the current density at a cell voltage of 0.6 V was recorded, and durability evaluation was performed according to the following criteria of Pass Ranks A and B and Fail Rank C. The results are shown in Table 1.

### [Pass Rank]

A: One in which the current density after 1000 cycles carried out is 80% or more with respect to the current density in the initial electricity generation performance evaluation.
B: One in which the current density after 1000 cycles carried out is 70% or more with respect to the current density in the initial electricity generation performance evaluation.

### [Fail Rank]

C: One less than Pass Rank B.

**[Table 1]**

| | Carbon material for catalyst carrier | | | | | Evaluation | |
|---|---|---|---|---|---|---|---|
| | Average primary particle size (nm) | BET specific surface area (m2/g) | Lc (002) (nm) | La (110) (nm) | Lc (002)/La (110) | Low-humidity performance | Durability |
| Example 1 | 41 | 471 | 1.72 | 2.47 | 0.70 | A | A |
| Example 2 | 41 | 532 | 1.76 | 2.63 | 0.67 | A | A |
| Example 3 | 41 | 409 | 2.12 | 2.34 | 0.91 | A | A |
| Example 4 | 50 | 635 | 2.52 | 2.47 | 1.02 | A | A |
| Example 5 | 57 | 472 | 3.30 | 3.37 | 0.98 | B | A |
| Comparative Example 1 | 40 | 33 | 2.41 | 2.86 | 0.84 | C | A |
| Comparative Example 2 | 57 | 320 | 3.61 | 3.52 | 1.03 | C | A |
| Comparative Example 3 | 31 | 382 | 1.57 | 2.26 | 0.69 | B | C |
| Comparative Example 4 | 29 | 250 | 2.15 | 2.75 | 0.78 | C | B |
| Comparative Example 5 | 29 | 202 | 2.74 | 3.63 | 0.76 | C | A |
| Comparative Example 6 | 30 | 935 | 1.18 | 2.22 | 0.53 | B | C |
| Comparative Example 7 | 30 | 681 | 1.43 | 2.77 | 0.52 | C | C |
| Comparative Example 8 | 27 | 510 | 1.79 | 3.62 | 0.49 | C | C |
| Comparative Example 9 | 30 | 344 | 2.82 | 3.70 | 0.76 | C | A |
| Comparative Example 10 | 28 | 659 | 1.81 | 3.55 | 0.51 | B | C |
| Comparative Example 11 | 20 | 726 | 1.22 | 2.22 | 0.55 | A | C |

As clear from the above result, both high duration performance and low-humidity performance are achieved in Examples 1 to 5.

Comparative Examples 1 and 2 were respectively examples in which the variation in activation gas was smaller with respect to Example 3 and Example 5, and resulted in deficient activation, the decreased specific surface areas, and deficient low-humidity performance.

Comparative Examples 3 to 8 were examples of heat treatment of commercially available porous carbon black at various temperatures, and each did not obtain one simultaneously satisfying the requirements (A) to (D) in the disclosure and also did not obtain performance achieving both low-humidity performance and durability.

Comparative Examples 9 and 10 were examples of heat treatment and then activation of commercially available porous carbon black, and each did not obtain one simultaneously satisfying of the requirements (A) to (D) in the disclosure and also did not obtain performance achieving both low-humidity performance and durability.

Comparative Example 11 was an example with an average primary particle size of less than 30 nm, and resulted in small Lc (002) and deficient durability.

The description of reference signs is as follows.
- 100: solid polymer fuel cell
- 110, 120: separator
- 130, 140: gas diffusion layer
- 150, 160: catalyst layer
- 170: electrolyte membrane

The disclosure of Japanese Patent Application No. 2023-108950 is herein incorporated by reference in its entirety.

All documents, patent applications, and technical standards described herein are herein incorporated by reference, as if each individual document, patent application, and technical standard were specifically and individually indicated to be incorporated by reference.

## Claims

1. A carbon material for a catalyst carrier of a solid polymer fuel cell, the carbon material comprising porous activated carbon black satisfying the following requirements (A), (B), (C), and (D):
(A) an average primary particle size is from more than 30 nm to 100 nm,
(B) a BET specific surface area is from 350 m²/g to 800 m²/g,
(C) Lc (002) obtained by analyzing a peak at a diffraction angle 2θ of from 20° to 26.5° in an XRD spectrum obtained with XRD (X-ray diffraction) measurement is from 1.7 nm to 4.0 nm, and
(D) La (110) obtained by analyzing a peak at a diffraction angle 2θ of from 70° to 80° in the XRD spectrum obtained with XRD (X-ray diffraction) measurement is 3.5 nm or less.

2. The carbon material for a catalyst carrier of a solid polymer fuel cell according to claim 1, wherein the following requirement (E) is further satisfied:
(E) a ratio (Lc (002)/La (110)) between the Lc (002) and the La (110) is from 0.6 to 1.2.

3. The carbon material for a catalyst carrier of a solid polymer fuel cell according to claim 1, wherein the average primary particle size is from 40 nm to 100 nm.

4. A catalyst layer for a solid polymer fuel cell, the catalyst layer comprising the carbon material for a catalyst carrier of a solid polymer fuel cell according to any one of claim 1 to claim 3.

5. A fuel cell comprising the catalyst layer for a solid polymer fuel cell according to claim 4.

6. The fuel cell according to claim 5, wherein the catalyst layer for a solid polymer fuel cell is a catalyst layer on a cathode side.
